# EUROPÄISCHE PATENTSCHRIFT

(11) **EP 2 892 936 B1**
(45) Veröffentlichungstag und Bekanntmachung des Hinweises auf die Patenterteilung: **17.04.2019**
(21) Anmeldenummer: 13756116.3
(22) Anmeldetag: 28.08.2013
(51) Int. Cl.: C08G 18/28, C08G 18/32, C08G 18/48, C08G 18/73, C08G 18/75, C08G 18/80, C09D 175/04

(54) **SILANFUNKTIONELLE BINDEMITTEL MIT THIOURETHANSTRUKTUR**
SILANE FUNCTIONAL BINDER WITH THIOURETHANE STRUCTURE
LIANT À SILANES FONCTIONNELS AVEC STRUCTURE EN THIOURÉTHANE

(30) Priorität: 04.09.2012 EP 12182886
(43) Veröffentlichungstag der Anmeldung: 15.07.2015
(73) Patentinhaber: Covestro Deutschland AG, 51373 Leverkusen (DE)
(72) Erfinder: LAAS, Hans-Josef, 51519 Odenthal (DE); VEGA SANCHEZ, Berta, 50674 Köln (DE); KAHL, Lothar, 51465 Bergisch Gladbach (DE)
(74) Vertreter: Levpat
(86) Internationale Anmeldenummer: PCT/EP2013/067840
(87) Internationale Veröffentlichungsnummer: WO 2014/037265

(56) Entgegenhaltungen:
- EP-A2- 0 202 491
- DE-A1-102008 030 304
- JP-A- 60 233 133
- US-A- 4 507 447

## Beschreibung

Die Erfindung betrifft ein Verfahren zur Herstellung von Silangruppen enthaltenden Polyurethanen, die nach diesem Verfahren erhältlichen Silangruppen enthaltenden Polyurethane, deren Verwendung als Bindemittel in vernetzbaren Lack-, Dichtstoff- oder Klebstoffrohstoffen, sowie die die erfindungsgemäßen Strukturen enthaltenden vernetzbaren Bindemittel.

Silanfunktionelle Polyurethane sind als Bindemittel für Klebstoffe, Dichtstoffe oder Beschichtungen seit längerem bekannt und vielfach beschrieben.

Die Herstellung Silangruppen tragender Polyurethane kann auf verschiedene Weise erfolgen, beispielsweise durch Reaktion von Polyisocyanaten bzw. isocyanatfunktionellen Prepolymeren mit gegenüber Isocyanatgruppen reaktiven Silanverbindungen, wie z. B. sekundäre Aminoalkylsilanen oder Mercaptoalkylsilanen.

Eine Methode, die häufig bevorzugt wird, da sie zu silanfunktionellen Polyurethanen besonders niedriger Viskosität führt, besteht darin, hydroxyfunktionelle Verbindungen, wie z. B. Polyether-, Polyurethan- oder Polyesterpolyole, mit Isocyanatoorganosilanen, beispielsweise den in der US 3 494 951 oder EP-A 0 649 850 beschriebenen Isocyanatoalkylalkoxysilanen, umzusetzen. Unter Verwendung solcher Isocyanatoalkylsilane lassen sich beispielsweise aus hydroxyfunktionellen Polyurethanprepoylmeren bzw. Polyetherpolyolen niedrigviskose Silan-terminierte Polyurethanprepolymere herstellen, die als Bindemittel für feuchtigkeitsvernetzende Kleb- und Dichtstoffe dienen können (siehe z. B. EP-A 0 070 475 und EP-A 0 372 561).

Die Umsetzung von Isocyanatopropyltrimethoxysilan oder Isocyanatopropyltriethoxysilan mit Polyolen, wie z. B. Polyacrylatpolyolen und/oder einfachen mehrwertigen Alkoholen, führt nach der Lehre der WO 2009/115079 zu Alkoxysilangruppen enthaltenden Polyurethanen, die sich in Gegenwart geeigneter Katalysatoren auch unter Wasserausschluss thermisch aushärten lassen und beispielsweise die Formulierung von Fahrzeuglacken sehr hoher Kratzbeständigkeit ermöglichen.

Die zur Silanmodifizierung von Polyolen bevorzugt eingesetzten Isocyanatoalkylalkoxysilane, wie insbesondere Isocyanatopropyltrimethoxysilan, sind im technischen Maßstab allerdings nur schwer zugänglich. Sie fallen nach den bekannten Syntheserouten in schwankender Qualität und mit unzureichender Lagerstabilität an und sind entsprechend teuer. Es wurden daher auch bereits alternative Isocyanatosilane zur Herstellung silanfunktioneller Polyurethane vorgeschlagen.

Die EP-A 1 136 495 beschreibt beispielsweise ein Verfahren zur Herstellung monomerenarmer 1 : 1-Monoaddukte aus speziellen sekundären Aminoalkylalkoxysilanen und Diisocyanaten, die als Bausteine zur gezielten Modifizierung von Polymeren geeignet sind.

Bei diesem Verfahren werden die Reaktionspartner unter Verwendung eines großen molaren Isocyanatüberschusses miteinander umgesetzt und im Anschluß die nicht umgesetzten monomeren Diisocyanate destillativ abgetrennt. Als sekundäre Aminosilane kommen die aus der EP-A 0 596 360 bekannten, durch Umsetzung von Maleinsäuredialkylestern mit primären Aminosilanen erhältlichen Asparaginsäureester zum Einsatz, deren Addukte mit Isocyanaten im Vergleich zu denen einfacher N-Alkylaminosilane eine erhöhte Lagerstabilität aufweisen sollen.

Wie eigene Versuche zeigten, sind die bei der Umsetzung der Silan-funktionellen Asparaginsäureester mit Isocyanaten gebildeten Harnstoffstrukturen tatsächlich stabil, während sich einfache N-Alkylaminosilane gegenüber Isocyanatgruppen wie übliche Blockierungsmittel verhalten, die bei erhöhter Temperatur wieder freigesetzt werden. Aufgrund dieses Blockierungsmittelcharakters bilden sich während der Dünnschichtdestillation von Reaktionsgemischen aus Diisocyanaten und einfachen N-Alkylaminosilanen durch thermische Harnstoffspaltung und anschließende Rekombination bei bereits anteilig abdestilliertem Diisocyanat-Monomer, neben dem gewünschten Isocyanatosilan (1 : 1-Monoaddukt) immer auch sehr hohe Anteile von zweifach silyliertem Diisocyanat (2 : 1-Bisaddukt) selbst wenn für die Umsetzung anfänglich ein sehr hoher Isocyanatüberschuß gewählt wurde. Monomerenarme Isocyanatosilane auf Basis einfacher N-Alkylaminosilane sind aus diesem Grund zur Herstellung silanfunktioneller Polyurethane nicht geeignet.

Aber auch in der EP-A 1 136 495 wird lediglich pauschal auf eine mögliche Verwendung der beanspruchten 1 : 1-Addukte aus Diisocyanat und Asparaginsäureester zur Modifizierung von Polymeren hingewiesen. Konkrete Beschreibungen silanfunktioneller Polyurethane finden sich in dieser Veröffentlichung nicht. Dies hat seine Ursache darin, dass das Verfahren ebenfalls einen gravierenden Nachteil aufweist.

Wie aus der EP-A 0 807 649 bekannt, reagieren Addukte von Isocyanaten an Alkoxysilangruppen enthaltende Asparaginsäureester bereits bei vergleichsweise milden Temperaturen von 50 - 160°C unter Freisetzung des Alkohols aus einer der Estergruppen und nachfolgende Cyclisierung zu Hydantoinderivaten ab. Diese Reaktion findet auch beim Verfahren der EP-A 1 136 495 aufgrund der thermischen Belastung während der Dünnschichtdestillation unweigerlich statt. Der abgespaltene Monoalkohol reagiert zu einem Teil mit dem gewünschten Zielmolekül, dem Isocyanatosilan, unter Urethanisierung und Verlust der NCO-Funktionalität, zum anderen Teil mit überschüssigem monomerem Diisocyanat. In Abhängigkeit von den gewählten Destillationsbedingungen erhält man Isocyanatosilane, die durch wechselnde Anteile an Nebenkomponenten, beispielsweise nicht isocyanatfunktionellen Silanen, verunreinigt sind und daher als Bausteine für eine gezielte Modifizierung von Polyolen unbrauchbar sind.

Des Weiteren ist die Verwendung von Diisocyanat/Mercaptosilan-Addukten zur Modifizierung von Polymeren prinzipiell bereits bekannt.

Die DE-A 2540080 beschreibt die Verwendung unterschiedlicher Isocyanatosilane, darunter Addukte aus Polyisocyanaten und gegenüber Isocyanatgruppen reaktiven Silanen, wie z. B. auch Mercaptosilanen, in einem Äquivalentverhältnis von Isocyanatgruppen zu gegenüber Isocyanaten reaktiven Gruppen von mindesten 2 : 1 in speziellen Klebstoffmassen. Eine Umsetzung der Addukte mit Polymeren, die NCO reaktive Gruppen tragen wird dabei nicht beschrieben.

Die JP-A 60233133 beschreibt beispielsweise konkret die äquimolare Umsetzung von Hexamethylendiisocyanat (HDI) mit 3-Mercaptopropyltrimethoxysilan. Das Reaktionsprodukt, das neben dem 1 : 1-Addukt aufgrund des statistischen Reaktionsverlaufes erhebliche Anteile an monomerem sowie zweifach umgesetztem Diisocyanat enthält, wird als solches ohne weitere Aufreinigung bzw. Monomerenabtrennung zur Modifizierung eines Aminogruppen enthaltenden Polymamids eingesetzt. Der hohe Anteil an Diisocyanat führt bei der Umsetzung mit Polymeren allerdings zu einer Kettenverlängerung bzw. Vorvernetzung, verbunden mit einem drastischen Aufbau an Viskosität. Gemäß JP-A 61047774 stellen diese Addukte geeignete Aufbaukomponenten für Schmelzkleber dar.

Die JP-A 61218631 beschreibt die Verwendung von Umsetzungsprodukten aus Diisocyanaten und Mercaptosilanen im molaren Verhältnis von 1 : 1 zur Modifizierung von Polyesterpolyolen bei der Herstellung von Schmelzklebern. Da auch hier unreagiertes, monomeres Diisocyanat nicht abgetrennt wird, kommt es bei der Umsetzung mit Polymeren ebenfalls zu einem drastischen Aufbau an Viskosität.

Aufgabe der vorliegenden Erfindung war es daher, ein Verfahren zur Herstellung niedrigviskoser Silan-modifizierter Polyurethane zur Verfügung zu stellen, das auf Isocyanatosilanen basiert, die auch in technischem Maßstab leicht und reproduzierbar zugänglich sind. Die nach diesem Verfahren erhältlichen Produkte sollten sich für sämtliche Anwendungsgebiete silanfunktioneller Polyurethane, insbesondere als Bindemittel für feuchtigkeitsvernetzende oder thermisch härtbare Klebstoffe, Dichtstoffe oder Beschichtungen eignen.

Diese Aufgabe wird erfindungsgemäß gelöst durch ein Verfahren zur Herstellung von Silangruppen enthaltenden Polyurethanen, durch Umsetzung von wenigstens
A) einer Zusammensetzung enthaltend
   a) eine oder mehrere Isocyanat- und Silangruppen enthaltende Verbindungen der allgemeinen Formel (I) 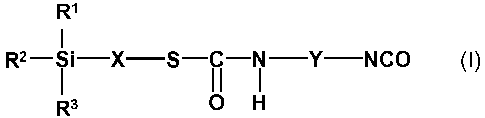 und
   b) ≤ 1 Gew.-%, bezogen auf die Gesamtmasse der Zusammensetzung A), eines oder mehrerer monomerer Diisocyanate mit aliphatisch, cycloaliphatisch, araliphatisch und/oder aromatisch gebundenen Isocyanatgruppen der allgemeinen Formel (II),

      **OCN-Y-NCO** (II)
   wobei
   - R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
   - X: für einen linearen oder verzweigten organischen Rest mit mindestens 2 Kohlenstoffatomen steht und
   - Y: für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht,
   mit
B) einem mindestens difunktionellen Polyol mit einem zahlenmittleren Molekulargewicht Mₙ von 62 bis 22000 g/mol, bevorzugt 90 bis 12000 g/mol
unter Einhaltung eines Äquivalentverhältnisses von Isocyanatgruppen zu Hydroxylgruppen von 0,7 : 1 bis 1,2 : 1.

Die im gesamten Dokument genannten zahlenmittleren Molekulargewichte Mₙ der polymeren Polyole werden mittels Gelpermeationschromatographie (GPC) wie folgt bestimmt: Die Kalibrierung erfolgt mit Polystyrol-Standards mit Molekulargewichten von Mp 1.000.000 bis 162. Als Eluent wird Tetrahydrofuran p.A. verwendet. Die folgenden Parameter werden bei der Doppelmessung eingehalten: Messung bei Raumtemperatur; Entgasung: Online - Degasser; Durchfluß: 1 ml/Min; Analysenzeit: 45 Minuten; Detektoren: Refraktometer und UV-Detektor; Injektionsvolumen: 100 µl - 200 µl.

Die Berechnung von Molmassenmittelwerte Mₙ erfolgt softwaregestützt. Basislinienpunkte und Auswertegrenzen werden entsprechend der DIN 55672 Teil 1 festgelegt. Im Falle niedermolekularer Polyole mit definierter Struktur gilt das aus der Summenformel errechenbare Molekulargewicht.

Das erfindungsgemäße Verfahren beruht auf der überraschenden Beobachtung, dass sich Isocyanat- und Silangruppen aufweisende Thiourethane aus üblichen Mercaptoalkylsilanen und Diisocyanaten anders als die vorstehend beschriebenen N-Alkylaminosilane selbst unter den hohen Temperaturen einer Dünnschichtdestillation völlig stabil verhalten und sich mit Polyolen zu silanfunktionellen Polyurethanen umsetzen lassen, die sich durch niedrige Viskositäten und eine geringe Kristallisationstendenz auszeichnen. Dies war deshalb überraschend, da beispielsweise aus der US 4,246,369 bekannt ist, dass aliphatische und aromatische Thiole ebenso wie sekundäre Amine Blockierungsmittel für Isocyanate darstellen, die bereits bei vergleichsweise niedrigen Temperaturen wieder abspalten. Es war daher nicht zu erwarten, dass aus Reaktionsgemischen von Mercaptosilanen und molar überschüssigen Mengen an Diisocyanaten die nicht umgesetzten Monomeren vom gewünschten Isocyanatosilan (1 : 1-Monoaddukt) abdestilliert werden können, ohne dass dabei mehr als die aufgrund des für die Umsetzung gewählten Äquivalentverhältnisses von Isocyanatgruppen zu Mercaptogruppen statistisch zu erwartende Menge an 2 : 1-Bisaddukt entsteht. Keiner der genannten Veröffentlichungen konnte der Fachmann irgendeinen Hinweis darauf entnehmen, dass es trotz der bekannten Thermolabilität von Thiourethanen möglich ist, Reaktionsgemische aus Diisocyanaten und Mercaptosilanen destillativ zersetzungsfrei aufzuarbeiten und dass die nach diesem Verfahren erhältlichen Isocyanatosilane sich besonders vorteilhaft mit Polyolen zu silanfunktionellen Polyurethanen umsetzen lassen.

Der Bestandteil b) der Zusammensetzung A) hat einen Anteil von ≤ 1 Gew.-%, bevorzugt ≤ 0,5 Gew.-% und besonders bevorzugt ≤ 0,3 Gew.-% an der Gesamtmasse der Zusammensetzung A).

In einer bevorzugten Ausführungsform des erfindungsgemäßen Verfahrens enthält die Zusammensetzung A) zusätzlich Verbindungen (c) der allgemeinen Formel (III) in einem Anteil von 2 bis 15 Gew.-%, bevorzugt 2 bis 10 Gew.-%, bezogen auf die Gesamtmasse der Komponenten a) und c), 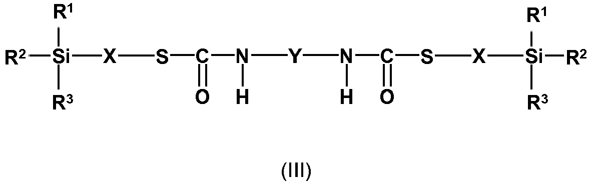 wobei
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht und
- Y: für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht.

In einer weiteren bevorzugten Ausführungsform der Erfindung enthält die Zusammensetzung A)
a) ≥ 85 Gew.-%, bevorzugt ≥ 90 Gew.-% an Verbindungen der allgemeinen Formel (I),
b) ≤ 1 Gew.-% eines oder mehrerer monomerer Diisocyanate mit aliphatisch, cycloaliphatisch, araliphatisch und/oder aromatisch gebundenen Isocyanatgruppen der allgemeinen Formel (II) und
c) ≤ 15 Gew.-%, bevorzugt ≤ 10 Gew.-% an Verbindungen der allgemeinen Formel (III), 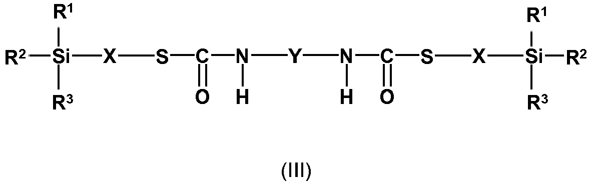
wobei sich der Anteil an a) und c) jeweils auf die Gesamtmasse der Verbindungen a) und c) bezieht, der Anteil an b) sich auf die Gesamtmasse der Zusammensetzung A) bezieht,
und wobei
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht und
- Y: für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht.

Die Zusammensetzung A) wird dabei bevorzugt durch Umsetzung von monomeren Diisocyanaten mit aliphatisch, cycloaliphatisch, araliphatisch und/oder aromatisch gebundenen Isocyanatgruppen (i) mit Mercaptosilanen (ii) in einem einem Äquivalentverhältnis von Isocyanatgruppen zu Mercaptogruppen von mindestens 6 : 1 bis höchstens 40 : 1, bevorzugt von mindestens 8 : 1 bis höchstens 30 : 1 und besonders bevorzugt von 10 : 1 bis höchstens 25 : 1 erhalten.

Isocyanat- und Silangruppen enthaltende Verbindungen, die unter Verwendung eines geringeren Diisocyanatüberschusses hergestellt wurden, enthalten einen sehr hohen Anteil des ungewünschten 2 : 1-Bisaddukt als gegenüber Polyolen unreaktives Nebenprodukt, so dass ein entsprechendes Verfahren nicht wirtschaftlich ist. Auch bei mehr als 40 fachem Überschuss an Diisocyanat wird das Verfahren unwirtschaftlich.

Als Ausgangsverbindungen i) für die Herstellung der Zusammensetzung A) werden bevorzugt Mercaptosilane der allgemeine Formel (IV) oder deren Gemische eingesetzt, 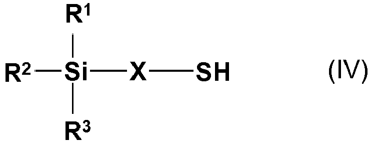 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
- X: für einen linearen oder verzweigten organischen Rest mit mindestens 2 Kohlenstoffatomen steht.

Besonders bevorzugte Mercaptosilane i) für das erfindungsgemäße Verfahren sind solche der allgemeinen Formel (IV), in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- X: für einen linearen oder verzweigten Alkylenrest mit 2 bis 10 Kohlenstoffatomen steht.

Ganz besonders bevorzugte Mercaptosilane i) sind solche der allgemeinen Formel (IV), in welcher
- R¹, R² und R³: für gleiche oder verschiedene Reste stehen und jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest steht, und
- X: für einen Propylenrest (-CH₂-CH₂-CH₂-) steht.

Des Weiteren ganz besonders bevorzugte Mercaptosilane i) sind solche der allgemeinen Formel (IV), in welcher
- R¹, R² und R³: für gleiche oder verschiedene Reste stehen und jeweils Methyl, Methoxy oder Ethoxy bedeuten, mit der Maßgabe, dass mindestens einer der Reste R¹, R² und R³ für einen Methoxy- oder Ethoxyrest steht, und
- X: für einen Propylenrest (-CH₂-CH₂-CH₂-) steht.

Geeignete Mercaptosilane i) sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Als Ausgangsverbindungen ii) für die Zusammensetzung A) sind beliebige Diisocyanate mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können.

Bevorzugte Diisocyanate sind beispielsweise solche der allgemeinen Formel (II)

**OCN-Y-NCO** (II),

in welcher Y für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht.

Beispielhaft seien genannt 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136.

Als Ausgangskomponente ii) besonders bevorzugt sind Diisocyanate der allgemeinen Formel (II), in welcher Y für einen linearen oder verzweigten, aliphatischen oder cycloaliphatischen Rest mit 6 bis 13 Kohlenstoffatomen steht.

Ganz besonders bevorzugte Ausgangskomponenten ii) für das erfindungsgemäße Verfahren sind 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Zur Herstellung der Zusammensetzung A) werden die Diisocyanate ii) mit den Mercaptosilanen i) bei Temperaturen von 20 bis 200 °C, vorzugsweise 40 bis 160 °C umgesetzt. Dabei werden die Komponente ii) und i) in einem Äquivalentverhältnis von Isocyanatgruppen (Komponente ii) zu Mercaptogruppen (Komponente i) von mindestens 6 : 1 bis höchstens 40 : 1, bevorzugt von 8 : 1 bis höchstens 30 : 1 und besonders bevorzugt von 10 : 1 bis höchstens 25 : 1 eingesetzt.

Die Umsetzung der Ausgangskomponenten i) und ii) kann nach dem erfindungsgemäßen Verfahren in Lösung oder lösemittelfrei in Substanz, bevorzugt jedoch lösemittelfrei ausgeführt werden.

Die Herstellung der Zusammensetzung A) kann ohne den Einsatz von Katalysatoren durchgeführt werden. Gegebenenfalls können zur Beschleunigung der Umsetzung aber auch übliche aus der Polyurethanchemie bekannte Katalysatoren mitverwendet werden. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-β-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyl-diethanolamin, N-Ethyl-diethanolamin, Dimethylaminoethanol und 2-(N,N-Dimethylaminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wis-mut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat.

Bevorzugte einzusetzende Katalysatoren sind tertiäre Amine, Amidine und Zinnverbindungen der genannten Art.

Besonders bevorzugte Katalysatoren sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU) sowie Dibutylzinn(IV)-dilaurat (DBTL).

Die beispielhaft genannten Katalysatoren können bei der Herstellung der Zusammensetzung A) einzeln oder in Form beliebiger Mischungen untereinander eingesetzt werden und kommen dabei, falls überhaupt, in Mengen von 0,001 bis 1,0 Gew.-%, bevorzugt 0,01 bis 0,5 Gew.-%, berechnet als Gesamtmenge an eingesetzten Katalysatoren bezogen auf die Gesamtmenge der verwendeten Ausgangsverbindungen, zum Einsatz.

Der Verlauf der Umsetzung kann beim erfindungsgemäßen Verfahren durch z. B. titrimetrische Bestimmung des NCO-Gehaltes verfolgt werden. Nach Erreichen des angestrebten NCO-Gehaltes, im allgemeinen nach vollständiger Urethanisierung, wird die Reaktion abgebrochen.

In einer bevorzugten Ausführungsform wird nach der Umsetzung der Komponenten A) mit B) ein nicht umgesetzter Überschusses an monomeren Diisocyanaten A) bis auf einen Restgehalt von weniger als 1 Gew.-%, vorzugsweise von weniger als 0,5 Gew.-%, besonders bevorzugt von weniger als 0,3 Gew.-%, bezogen auf die Gesamtmasse des Reaktionsproduktes, vom Reaktionsprodukt abgetrennt.

Das Reaktionsgemisch wird dabei vorzugsweise durch Dünnschichtdestillation im Vakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von überschüssigen monomeren Diisocyanaten befreit.

Die anfallenden Destillate können problemlos zur erneuten Umsetzung mit Mercaptosilanen verwendet werden.

In einer weiteren, jedoch weniger bevorzugten Ausführungsform werden die monomeren Diisocyanate durch Extraktion mit geeigneten, gegenüber Isocyanat- und Silangruppen inerten Lösungsmitteln, beispielsweise aliphatischen oder cycloaliphatischen Kohlenwasserstoffen wie Pentan, Hexan, Heptan, Cyclopentan oder Cyclohexan vom gebildeten Thiourethan abgetrennt.

Unabhängig von der Art der Aufarbeitung erhält man als Produkte klare, praktisch farblose Isocyanat- und Silangruppen enthaltende Verbindungen, die in Abhängigkeit vom gewählten Ausgangsdiisocyanat niedrig- bis hochviskose Flüssigkeiten darstellen und NCO-Gehalte von 6,0 bis 13,5 Gew.-%, vorzugsweise 7,0 bis 12,0 Gew.-%, besonders bevorzugt 8,0 bis 11,5 Gew.-%, sowie Restgehalte an monomeren Ausgangsdiisocyanaten von weniger als 1,0 Gew.-%, vorzugsweise von weniger als 0,5 Gew.-%, besonders bevorzugt von weniger als 0,3 Gew.-%, bezogen auf die Gesamtmasse des Reaktionsproduktes, aufweisen.

Als Bestandteil b) der Zusammensetzung A) können folglich alle zur Herstellung der Zusammensetzung A) eingesetzten monomeren Diisocyanate i) auftreten. Für b) gelten auch die für die Komponente ii) oben angegebenen bevorzugten Ausführungsformen.

Bevorzugt gilt für die Formeln (I) und (II) der Komponenten a) und b) oder für die Formeln (I), (II) und (III) der Komponenten a), b) und c), dass
- Y: für einen linearen oder verzweigten, aliphatischen oder cycloaliphatischen Rest mit 6 bis 13 Kohlenstoffatomen steht.

Des Weiteren gilt für die Formel (I) der Komponente a) oder die Formeln (I) und (III) der Komponenten a) und c) bevorzugt, dass
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann und
- X: für einen linearen oder verzweigten Alkylenrest mit 2 bis 10 Kohlenstoffatomen steht.

Besonders bevorzugt gilt für die Formel (I) der Komponente a) oder die Formeln (I) und (III) der Komponenten a) und c), dass
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht und
- X: für einen Propylenrest (-CH₂-CH₂-CH₂-) steht.

Ganz besonders bevorzugt gilt für die Formel (I) der Komponente a) oder die Formeln (I) und (III) der Komponenten a) und c), dass
- R¹, R² und R³: für gleiche oder verschiedene Reste stehen und jeweils Methyl, Methoxy oder Ethoxy bedeuten, mit der Maßgabe, daß mindestens einer der Reste R1, R2 und R3 für einen Methoxy- oder Ethoxyrest steht und
- X: für einen Propylenrest (-CH₂-CH₂-CH₂-) steht.

Bei den beim erfindungsgemäßen Verfahren eingesetzten Polyolkomponenten B) handelt es sich um beliebige mindestens difunktionellen Polyole mit einem zahlenmittleren Molekulargewicht Mₙ von 62 bis 22000 g/mol, bevorzugt 90 bis 18000 g/mol, besonders bevorzugt 90 bis 12000 g/mol.

Vorzugsweise weisen die beim erfindungsgemäßen Verfahren eingesetzten Polyolkomponenten B) eine mittlere Funktionalität von 2 bis 6 und besonders bevorzugt eine mittlere Funktionalität von 2 bis 4 auf.

Auch beliebige Gemische der genannten Polyole können eingesetzt werden.

In einer bevorzugten Ausführungsform der Erfindung kommen als Komponente B) mehrwertige Alkohole, Ether- oder Esteralkohole und/oder polymere Polyole zum Einsatz, wobei die polymeren Polyole ein zahlenmittleren Molekulargewicht Mₙ von 200 bis 22000 g/mol, bevorzugt 250 bis 18000 g/mol aufweisen.

Nach einer speziellen Ausführungsform des erfindungsgemäßen Verfahrens werden als Polyolkomponente B) mehrwertige Alkohole und/oder Ether- oder Esteralkohole eingesetzt, die 2 bis 14 Kohlenstoffatome, bevorzugt 4 bis 10 Kohlenstoffatome enthalten.

Geeignete Polyole B) sind beispielsweise einfache mehrwertige Alkohole mit 2 bis 14, vorzugsweise 4 bis 10 Kohlenstoffatomen, wie z. B. 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2,6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, 3(4),8(9)-Bis-(hydroxymethyl)-tricyclo-[5.2.1.0^{2,6}]decane, Di-Trimethylolpropan, 2,2-Bis(hydroxymethyl)-1,3-propandiol (Pentaerythrit), 2,2,6,6-Tetrakis(hydroxymethyl)-4-oxa-heptan-1,7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsäureneopentylglykolester.

Geeignete Polyole B) sind auch die üblichen aus der Polyurethanchemie bekannten polymeren Polyetherpolyole, Polyesterpolyole, Polycarbonatpolyole und/oder Polyacrylatpolyole, die üblicherweise ein zahlenmittleres Molekulargewicht von 200 bis 22000, vorzugsweise von 250 bis 18000, besonders bevorzugt von 250 bis 12000 aufweisen. Ein breiter Überblick über geeignete polymere Polyole B) findet sich beispielsweise in N. Adam et al.: "Polyurethanes", Ullmann's Encyclopedia of Industrial Chemistry, Electronic Release, 7th ed., chap. 3.2 - 3.4, Wiley-VCH, Weinheim 2005.

Geeignete Polyetherpolyole B) sind beispielsweise solche der in der DE 26 22 951 B, Spalte 6, Zeile 65 bis Spalte 7, Zeile 26, der EP-A 0 978 523 Seite 4, Zeile 45 bis Seite 5, Zeile 14 oder der WO 2011/069966, Seite 4, Zeile 20 bis Seite 5, Zeile 23 genannten Art, sofern sie den oben gemachten Angaben hinsichtlich Funktionalität und Molekulargewicht entsprechen. Besonders bevorzugte Polyetherpolyole B) sind Anlagerungsprodukte von Ethylenoxid und/oder Propylenoxid an 1,2-Propandiol, 1,3-Propandiol, Glycerin, Trimethylolpropan, Ethylendiamin und/oder Pentaerythrit oder die beispielsweise gemäß Angew. Chem. 72, 927 (1960) durch Polymerisation von Tetrahydrofuran erhältlichen Polytetramethylenetherglykole mit zahlenmittleren Molekuargewichten von 400 g/mol bis 4000 g/mol.

Geeignete Polyesterpolyole B) sind die beispielsweise solche der in der EP-A 0 978 523, Seite 5, Zeilen 17 bis 47 oder der EP-A 0 659 792, Seite 6, Zeilen 32 bis 45 genannten Art, sofern sie den oben gemachten Angaben hinsichtlich Funktionalität und Molekulargewicht entsprechen. Besonders bevorzugte Polyesterpoylole sind Kondensationsprodukte mehrwertiger Alkohole, wie z. B. 1,2-Ethandiol, 1,2-Propandiol, Diethylenglykol, 1,4-Butandiol, 1,6-Hexandiol, Neopentylglykol, 1,4-Cyclohexandimethanol, 1,4-Cyclohexandiol, Perhydrobisphenol, 1,1,1-Trimethylolpropan, 1,2,3-Propantriol, Pentaerythrit und/oder Sorbitol, mit unterschüssigen Mengen an mehrwertigen Carbonsäuren bzw. Carbonsäureanhydriden, wie z. B. Bernsteinsäure, Adipinsäure, Sebazinsäure, Dodecandisäure, Glutarsäureanhydrid, Maleinsäureanhydrid, Phthalsäureanhydrid, Isophthalsäure, Terephthalsäure, Trimellitsäure Hexahydrophthalsäureanhydrid und/oder Tetrahydrophthalsäureanhydrid, oder solche, wie sie in an sich bekannter Weise aus Lactonen, wie z. B. ε-Caprolacton, und einfachen mehrwertigen Alkoholen, wie z. B. den oben beispielhaft genannten, als Startermolekülen unter Ringöffnung erhältlich sind.

Geeignete Polycarbonatpolyole B) sind insbesondere die an sich bekannten Umsetzungsprodukte zweiwertiger Alkohole, beispielsweise solcher, wie sie oben in der Liste der mehrwertigen Alkohole beispielhaft genannt sind, mit Diarylcarbonaten, wie z. B. Diphenylcarbonat, Dimethylcarbonat oder Phosgen. Geeignete Polycarbonatpolyole B) sind auch solche, die neben Carbonatstrukturen zusätzlich Estergruppen enthalten. Hierbei handelt es sich insbesondere um die an sich bekannten Polyestercarbonatdiole, wie sie beispielsweise gemäß der Lehre der DE-AS 1 770 245 durch Umsetzung zweiwertiger Alkohole mit Lactonen, wie insbesondere ε-Caprolacton, und anschließende Reaktion der dabei entstehenden Polyesterdiole mit Diphenyl- oder Dimethylcarbonat erhalten werden können. Ebenfalls geeignete Polycarbonatpolyole B) sind solche, die neben Carbonatstrukturen zusätzlich Ethergruppen enthalten. Hierbei handelt es sich insbesondere um die an sich bekannten Polyethercarbonatpolyole, wie sie beispielsweise nach dem Verfahren der EP-A 2046861 durch katalytische Umsetzung von Alkylenoxiden (Epoxiden) und Kohlendioxid in Anwesenheit von H-funktionellen Startersubstanzen erhältlich sind.

Geeignete Polyacrylatpolyole B) sind beispielsweise solche der in WO 2011/124710 Seite 10, Zeile 32 bis Seite 13, Zeile 18 genannten Art, sofern sie den oben gemachten Angaben hinsichtlich Funktionalität und Molekulargewicht entsprechen. Besonders bevorzugte Polyacrylatpolyole B) sind Polymerisate bzw. Copolymerisate von Hydroxyalkylestern der Acrylsäure oder Methacrylsäure, wie z. B. Hydroxyethyl(meth)acrylat, Hydroxypropyl(meth)acrylat oder Hydroxybutyl(meth)acrylat, gegebenenfalls gemeinsam mit Acrylsäurealkylestern und/oder Methacrylsäurealkylestern, wie z. B. Methyl(meth)acrylat, Ethyl(meth)acrylat, n-Butyl(meth)acrylat, isoButyl(meth)acrylat, 2-Ethylhexyl(meth)acrylat, Cyclohexyl(meth)acrylat, Isobornyl(meth)acrylat, Lauryl(meth)acrylat, Styrol oder anderen copolymerisierbaren olefinisch ungesättigten Monomeren, wie z. B. Acrylsäure, Methacrylsäure oder Maleinsäuredimethylester.

Geeignete Polyole B) sind beispielsweise auch die bekannten, durch Umsetzung einfacher Glykole, wie z. B. Diethylenglykol, Triethylenglykol, 4,4'-Dioxethoxy-diphenyl-dimethylmethan (Addukt von 2 mol Ethylenoxid an Bisphenol A) oder Hexandiol, mit Formaldehyd erhältlichen Polyacetalpolyole oder auch durch Polykondensation cyclischer Acetale, wie z. B. Trioxan, hergestellte Polyacetale.

Weitere geeignete Polyole B) sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole.

Hydroxylgruppen enthaltende Polybutadiene können ebenfalls als Polyole B) dienen.

In einer bevorzugten Ausführungsform der Erfindung werden als Komponente B) Polyether-, Polyester-, Polycarbonat- und/oder Polyacrylatpolyole eingesetzt.

Die Polyole B) kommen beim erfindungsgemäßen Verfahren einzeln oder in Form beliebiger Mischungen untereinander zum Einsatz. Sie können sowohl in lösemittelfreier Form als auch in üblichen Lösemitteln gelöst vorliegen.

Geeignete Lösemittel sind insbesondere solche, die sich gegenüber den reaktiven Gruppen der Thiourethane A) inert verhalten, beispielsweise die bekannten üblichen aprotischen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, Ethylethoxypropionat, Propylencarbonat, N-Methylpyrrolidon und N-Methylcaprolactam, oder beliebige Gemische solcher Lösemittel.

Zur Durchführung des erfindungsgemäßen Verfahrens werden die isocyanat- und silanfunktionellen Thiourethane A) mit mindestens einem Polyol B) in beliebiger Reihenfolge bei Temperaturen von 20 bis 200°C, vorzugsweise von 40 bis 160°C, besonders bevorzugt von 60 bis 120°C, gegebenenfalls in Gegenwart mindestens eines der vorstehend genannten aprotischen Lösemittels zu Silangruppen enthaltenden Polyurethanen umgesetzt. Dabei wird ein Äquivalentverhältnis von Isocyanatgruppen zu Hydroxylgruppen von 0,7 : 1 bis 1,2 : 1, vorzugsweise von 0,8 : 1 bis 1,1 : 1, besonders bevorzugt von 0,9 : 1 bis 1,05 : 1 eingehalten.

Das erfindungsgemäße Verfahren kann unkatalysiert durchgeführt werden. Zur Beschleunigung der Urethanisierungsreaktion können gegebenenfalls aber auch in der Isocyanatchemie übliche Katalysatoren mitverwendet werden. Geeignete Urethanisierungskatalysatoren sind beispielsweise die bereits oben als zur Herstellung der Zusammensetzung A) geeignet beschriebenen Verbindungen. Diese Katalysatoren können beim erfindungsgemäßen Verfahren einzeln oder in Form beliebiger Mischungen untereinander eingesetzt werden und kommen dabei, falls überhaupt, in Mengen von 0,001 bis 1,0 Gew.-%, bevorzugt 0,01 bis 0,5 Gew.-%, berechnet als Gesamtmenge an eingesetzten Katalysatoren bezogen auf die Gesamtmenge der Reaktionspartner A) und B), zum Einsatz.

Um ein vorzeitige Vernetzung der Silangruppen während des erfindungsgemäßen Verfahrens zu unterbinden, kann der Zusatz von Wasserfängern, beispielsweise Orthoameisenestern, wie z. B. Triethylorthoformiat, oder Vinylsilanen, wie z. B. Vinyltrimethoxysilan, vorteilhaft sein. Diese Wasserfänger kommen, falls überhaupt, in Mengen von bis zu 5 Gew.-%, vorzugsweise bis zu 2 Gew.-%, bezogen auf die Gesamtmenge der Reaktionspartner A) und B) zum Einsatz.

In einer bevorzugten Ausführungsform des erfindungsgemäßen Verfahrens wird die Zusammensetzung A) gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt. Anschließend wird ein Polyol B) oder eine Mischung von Polyolen B) gegebenenfalls gemeinsam mit weiterem Lösungsmittel in beliebiger Reihenfolge nacheinander oder im Gemisch im oben angegebenen Äquivalentverhältnis zugegeben und die Reaktionstemperatur für die Urethanisierung gegebenenfalls durch eine geeignete Maßnahme (Heizen oder Kühlen) auf eine Temperatur von 40 bis 160°C eingestellt. Bei Mitverwendung von Katalysatoren und/oder Wasserfängern können diese der Zusammensetzung A) und/oder der Polyolkomponente B) bereits vor Beginn der eigentlichen Umsetzung zugesetzt werden. Es ist aber auch möglich, diese Hilfsmittel dem Reaktionsgemisch zu einem beliebigen Zeitpunkt während der Urethanisierungsreaktion zuzusetzen. Zur Entfernung von Restfeuchtigkeit in der Polyolkomponente B) werden gegebenenfalls mit zuverwendende Wasserfänger dieser bevorzugt vor Beginn der eigentlichen Umsetzung zugesetzt.

Der Verlauf der Umsetzung kann beim erfindungsgemäßen Verfahren durch z. B. titrimetrische Bestimmung des NCO-Gehaltes oder IR-spektroskopisch verfolgt werden. Im Anschluss an die Urethanisierungsreaktion, d. h. nach vollständigem Umsatz von Isocyanat- und Hydroxylgruppen, erhält man als Produkte des erfindungsgemäßen Verfahrens die erfindungsgemäßen Silangruppen enthaltenden Polyurethane.

Ein weiterer Gegenstand der Erfindung sind Silangruppen enthaltende Polyurethane, erhältlich nach dem erfindungsgemäßen Verfahren.

Die erfindungsgemäßen Silangruppen enthaltenden Polyurethane stellen wertvolle Bindemittel zur Herstellung von über Silanstrukturen vernetzbaren Lack-, Dichtstoff- oder Klebstoffrohstoffen dar.

Weitere Gegenstände der Erfindung sind die Verwendung der erfindungsgemäßen Silangruppen enthaltenden Polyurethane als Ausgangskomponente bei der Herstellung von vernetzbaren Bindemitteln oder von Lack-, Dichtstoff- oder Klebstoffrohstoffen, sowie die die erfindungsgemäßen Silangruppen enthaltenden Polyurethane enthaltenden vernetzbaren Bindemittel.

Die erfindungsgemäßen Silangruppen enthaltenden Polyurethane können bevorzugt als Bindemittel zur Herstellung von Lack-, Dichtstoff- oder Klebstoffrohstoffen entweder lösemittelfrei eingesetzt werden, lassen sich bei Bedarf aber auch mit üblichen Lösemitteln, beispielsweise den obengenannten, beim erfindungsgemäßen Verfahren gegebenenfalls mitzuverwendenden inerten Lacklösemitteln, trübungsfrei verdünnen .

Während sich die erfindungsgemäßen Verfahrensprodukte auf Basis einfacher Alkohole und/oder verzweigter Polyole, insbesondere von Polyester- und/oder Polyacrylatpolyolen, vorzugsweise für klassiche Lackanwendungen eignen, kommen solche auf Basis hochmolekularer linearer Polyetherdiole insbesondere für Anwendungen im Dichtstoff- oder Klebstoffbereich zum Einsatz.

Die Aushärtung der erfindungsgemäßen Silangruppen enthaltenden Polyurethane kann sowohl feuchtigkeitsvernetzend im Sinne einer Sol-Gel-Reaktions als auch thermisch, z. B. auch in Abwesenheit von Feuchtigkeit erfolgen.

Dabei können auch Katalysatoren mitverwendet werden, die die Hydrolyse und Kondensation von Alkoxysilangruppen oder die thermisch induzierte Kondensation beschleunigen. Derartige Katalysatoren sind neben vorstehend genannten Urethanisierungskatalysatoren beispielsweise Säuren, wie z. B. Schwefelsäure, p-Toluolsulfonsäure, Trifluormethansulfonsäure, Essigsäure, Trifluoressigsäure und Dibutylphosphat, Basen, wie z. B. N-substituierte Amidine wie 1,5-Diazabicyclo[4.3.0]non-5-en (DBN) und 1,5-Diazabicyclo[5.4.0]undec-7-en (DBU), aber auch Metallsalze und -chelate, wie z. B. Tetraisopropyltitanat, Tetrabutyltitanat, Titan(IV)acetylacetonat, Aluminiumtri-sec-butylat, Aluminiumacetylacetonat, Aluminiumtriflat oder Zinntriflat, wie sie z. B. auch in WO 2006/042658, Seite 11, Zeile 23 bis Seite 12, Zeile 11 beispielhaft beschrieben sind.

Diese Katalysatoren kommen, falls überhaupt, in Mengen von bis zu 5 Gew.-%, vorzugsweise bis zu 2 Gew.-%, bezogen auf das Gewicht der als Bindemittel eingesetzten Silangruppen enthaltenden Polyurethane zum Einsatz. In Abhängigkeit von der Art und Menge des eingesetzten Katalysators kann die Aushärtung der aus den erfindungsgemäßen Verfahrensprodukten formulierten Beschichtungsmittel, Dichtstoffe oder Klebstoffe über einen weiten Temperaturbereich, beispielsweise von -20 bis 200°C, vorzugsweise von 0 bis 180°C, besonders bevorzugt von 20 bis 160°C, erfolgen.

Gegebenenfalls können den mit den erfindungsgemäßen Silangruppen enthaltenden Polyurethanen formulierten Beschichtungssystemen, Dicht- oder Klebstoffen auch beliebige weitere hydrolysierbare Silanverbindungen, wie z. B. Tetramethoxysilan, Tetraethoxysilan, Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, (3-Glycidyloxypropyl)-methyldiethoxysilan, (3-Glycidyloxypropyl)trimethoxysilan, Phenyltrimethoxysilan, Phenyltriethoxysilan oder silanfunktionelle Coplymerisate der in der US 4 499 150 genannten Art, oder Gemische solcher Silanverbindungen als Reaktionspartner zugesetzt werden.

Den erfindungsgemäßen Silangruppen enthaltenden Polyurethanen können bei der Formulierung von Lacken, Dichtstoffen oder Klebstoffen auch beliebige weitere übliche Hilfs- und Zusatzmittel, wie z. B. UV-Stabilisatoren, Antioxidantien, Wasserfänger, Slipadditive, Entschäumer, Verlaufsmittel, Rheologieadditive, Flammschutzmittel, Füllstoffe und/oder Pigmente, zugesetzt werden.

Neben der Verwendung als Alleinbindemittel können die erfindungsgemäßen Verfahrensprodukte, beispielsweise zur Erzielung ganz spezieller Eigenschaften, wie z. B. zur Haftverbesserung, auch üblichen 1K- oder 2K-Polyurethansystemen, beispielsweise als Additiv, zugemischt werden.

Die Applikation der unter Verwendung der erfindungsgemäßen Silangruppen enthaltenden Polyurethane formulierten Beschichtungen, Dichtstoffe oder Klebstoffe kann nach an sich bekannten Methoden erfolgen, beispielsweise durch Spritzen, Streichen, Tauchen, Fluten oder mit Hilfe von Walzen oder Rakeln in einer oder mehrerer Schichten. Als Untergründe kommen dabei beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

OH-Zahlen wurden titrimetrisch nach DIN 53240-2: 2007-11, Säure-Zahlen nach DIN 3682 bestimmt. Die angegebenen OH-Gehalte wurde aus den analytisch ermittelten OH-Zahlen errechnet.

Die Rest-Monomeren Gehalte wurden nach DIN EN ISO 10283 gaschromatographisch mit internem Standard gemessen.

Die Anteile an Bisaddukt (aus zwei Molekülen Mercaptosilan und einem Molekül Diisocyanat) wurden durch Gelpermationschromatographie in Anlehnung an DIN 55672-1 (Gelpermeationschromatographie (GPC) - Teil 1: Tetrahydrofuran (THF) als Elutionsmittel) ermittelt, mit der Änderung, dass mit einer Flußrate von 0,6 ml/min statt 1,0 ml/min gearbeitet wurde. Die den Chromatogrammen entnommenen Anteile an Bisaddukt in Flächen-%, welche softwaregestützt ermittelt wurden, wurden näherungsweise jeweils Anteilen in Gew.-% gleichgesetzt und als solche, bezogen auf die Gesamtmenge an Mono- und Bisaddukt, angegeben.

Sämtliche Viskositätsmessungen erfolgten mit einem Physica MCR 51 Rheometer der Fa. Anton Paar Germany GmbH (DE) nach DIN EN ISO 3219.

### Ausgangsverbindungen

### Herstellung der Zusammensetzungen A)

### Zusammensetzung A1)

1680 g (10 mol) Hexamethylendiisocyanat (HDI) wurden bei einer Temperatur von 80°C unter trockenem Stickstoff mit 196 g (1,0 mol) Mercaptopropyltrimethoxysilan versetzt und nach Zugabe von 0,05 g (25 ppm) 1,4-Diazabicyclo[2.2.2]octan (DABCO) 1 Stunde gerührt, bis ein NCO-Gehalt von 42,5 %, entsprechend einem vollständigen Umsatz, erreicht war. Anschließend wurde das nicht umgesetzte monomere HDI bei einer Temperatur von 140°C und einem Druck von 0,1 mbar im Dünnschichtverdampfer abgetrennt. Man erhielt ein praktisch farbloses, klares Isocyanatosilan mit folgenden Kenndaten:

| | |
|---|---|
| NCO-Gehalt: | 11,2 % |
| monomeres HDI: | 0,19 % |
| Viskosität (23°C): | 80 mPas |
| Anteil Bisaddukt: | 4,1 % |

### Zusammensetzung A2)

2220 g (10 mol) Isophorondiisocyanat (IPDI) wurden bei einer Temperatur von 80°C unter trockenem Stickstoff mit 196 g (1,0 mol) Mercaptopropyltrimethoxysilan versetzt und nach Zugabe von von 0,06 g (25 ppm) Dibutylzinndilaurat (DBTL) 3 Stunden gerührt, bis ein NCO-Gehalt von 33,0 %, entsprechend einem vollständigen Umsatz, erreicht war. Anschließend wurde das nicht umgesetzte monomere IPDI bei einer Temperatur von 150°C und einem Druck von 0,1 mbar im Dünnschichtverdampfer abgetrennt. Man erhielt ein praktisch farbloses, klares Isocyanatosilan mit folgenden Kenndaten:

| | |
|---|---|
| NCO-Gehalt: | 9,7 % |
| monomeres IPDI: | 0,23 % |
| Viskosität (23°C): | 5.400 mPas |
| Anteil Bisaddukt: | 4,8 % |

### Zusammensetzung A3)

Nach dem für Zusammensetzung A2) beschriebenen Verfahren wurden 2620 g (10 mol) 4,4'-Diisocyanatodicyclohexylmethan (H₁₂-MDI) mit 196 g (1,0 mol) Mercaptopropyltrimethoxysilan in Gegenwart von 0,07 g (25 ppm) DBTL umgesetzt. Nach Erreichen eines NCO-Gehalts von 28,3 %, entsprechend einem vollständigen Umsatz, wurde das nicht umgesetzte monomere H₁₂-MDI bei einer Temperatur von 150°C und einem Druck von 0,1 mbar im Dünnschichtverdampfer abgetrennt. Man erhielt ein praktisch farbloses, klares Isocyanatosilan mit folgenden Kenndaten:

| | |
|---|---|
| NCO-Gehalt: | 8,6 % |
| monomeres H12-MDI: | 0,20 % |
| Viskosität (23°C): | 15.200 mPas |
| Anteil Bisaddukt: | 6,0 % |

### Zusammensetzung A4) (Vergleich)

168 g (1,0 mol) Hexamethylendiisocyanat (HDI) wurden bei einer Temperatur von 80°C unter trockenem Stickstoff mit 196 g (1,0 mol) Mercaptopropyltrimethoxysilan versetzt und nach Zugabe von 0,05 g (25 ppm) DBTL 3 Stunden gerührt, bis ein NCO-Gehalt von 11,5 %, entsprechend einem vollständigen Umsatz, erreicht war. Man erhielt ein praktisch farbloses, klares silanmodifiziertes Isocyanatgemisch mit folgenden Kenndaten:

| | |
|---|---|
| NCO-Gehalt: | 11,5 % |
| monomeres HDI: | 5,69 % |
| Viskosität (23°C): | 80 mPas |
| Anteil Bisaddukt: | 38,9 % |

### Polvole B

### Polvol B1)

60 %ig in Solventnaphtha 100 gelöstes Polyacrylatpolyol, hergestellt aus 23,2 % Hydroxypropylmethacrylat, 29,6 % n-Butylacrylat, 44,7 % Styrol, 1,9 % Methylmethacrylat und 0,6 % Acrylsäure.

| | |
|---|---|
| OH-Zahl (OH-Gehalt) | 53 mg KOH/g (1,6 %) |
| Äquivalentgewicht: | 1062 g/val OH |
| Säurezahl: | 4,0 mg KOH/g |
| Viskosität (23°C): | 2.800 mPas |

### Polvol B2)

70 %ig in Butylacetat gelöstes Polyacrylatpolyol, hergestellt aus 34,0 % Hydroxyethylmethacrylat, 25,1 % n-Butylacrylat, 40,0 % Styrol und 0,9 % Acrylsäure.

| | |
|---|---|
| OH-Zahl (OH-Gehalt) | 98 mg KOH/g (3,0 %) |
| Äquivalentgewicht: | 572 g/val OH |
| Säurezahl: | 7,5 mg KOH/g |
| Viskosität (23°C): | 3.500 mPas |

### Polvol B3)

Lösemittelfreies Polyesterpolyol, hergestellt aus 11,9 % Adipinsäure, 33,7 % Isophthalsäure, 10,7 % Trimethylolpropan, 37,7 % 1,6-Hexandiol und 6,0 % Phthalsäureanhydrid.

| | |
|---|---|
| OH-Zahl (OH-Gehalt) | 143 mg KOH/g (4,3 %) |
| Äquivalentgewicht: | 392 g/val OH |
| Säurezahl: | 1mg KOH/g |
| Viskosität (23°C): | 3.500 mPas |

### Polvol B4)

75 %ig in Solventnaphtha 100 gelöstes Polyesterpolyol, hergestellt aus 19,2 % Adipinsäure, 22,3% Maleinsäureanhydrid, 4,6 % Trimethylolpropan, 1,7 % 1,2-Propandiol und 40,2 % Neopentylglykol.

| | |
|---|---|
| OH-Zahl (OH-Gehalt) | 68 mg KOH/g (2,0 %) |
| Äquivalentgewicht: | 825 g/val OH |
| Säurezahl: | 3 mg KOH/g |
| Viskosität (23°C): | 3.700 mPas |

### Polvol B5)

### Lösemittelfreies lineares Polypropylenoxidpolyetherdiol

| | |
|---|---|
| OH-Zahl (OH-Gehalt) | 13 mg KOH/g (0,4 %) |
| Äquivalentgewicht: | 4250 g/val OH |
| Viskosität (25°C): | 2.850 mPas |

### Beispiel 1 (erfindungsgemäß)

375,0 g (1,0 val) der Zusammensetzung A1) wurden bei einer Temperatur von 80°C unter trockenem Stickstoff mit 73,1 g (1,0 val) 2-Ethyl-1,3-hexandiol versetzt und solange gerührt, bis IR-spektroskopisch kein Isocyanat mehr nachweisbar war. Es lag ein erfindungsgemäßes Silangruppen enthaltendes Polyurethan in Form eines viskosen farblosen Harzes vor.

| | |
|---|---|
| Festkörpergehalt: | 100 % |
| Viskosität (23°C): | 44.000 mPas |

### Beispiel 2 (erfindungsgemäß)

375,0 g (1,0 val) der Zusammensetzung A1) wurden bei einer Temperatur von 80°C unter trockenem Stickstoff mit einem Gemisch aus 58,5 g (0,8 val) 2-Ethyl-1,3-hexandiol, 212,1 g (0,2 val) des Polyols B1) und 6,5 g Triethylorthoformiat als Wasserfänger versetzt und 20 Stunden gerührt, bis IR-spektroskopisch kein Isocyanat mehr nachweisbar war. Nach Abkühlen auf Raumtemperatur wurde das Reaktionsgemisch mit 65,2 g Solventnaphtha 100 verdünnt. Es lag ein erfindungsgemäßes Silangruppen enthaltendes Polyurethan in Form einer farblosen Lösung vor.

| | |
|---|---|
| Festkörpergehalt: | 70 % |
| Viskosität (23°C): | 2.100 mPas |

### Beispiel 3 (erfindungsgemäß)

375,0 g (1,0 val) der Zusammensetzung A1) wurden bei einer Temperatur von 80°C unter trockenem Stickstoff mit einem Gemisch aus 43,9 g (0,6 val) 2-Ethyl-1,3-hexandiol, 226,3 g (0,4 val) des Polyols B2) und 5,8 g Triethylorthoformiat als Wasserfänger versetzt und 20 Stunden gerührt, bis IR-spektroskopisch kein Isocyanat mehr nachweisbar war. Nach Abkühlen auf Raumtemperatur wurde das Reaktionsgemisch mit 182,0 g Butylacetat verdünnt. Es lag ein erfindungsgemäßes Silangruppen enthaltendes Polyurethan in Form einer farblosen Lösung vor.

| | |
|---|---|
| Festkörpergehalt: | 70 % |
| Viskosität (23°C): | 720 mPas |

### Beispiel 4 (erfindungsgemäß)

375,0 g (1,0 val) der Zusammensetzung A1) wurden bei einer Temperatur von 80°C unter trockenem Stickstoff mit einem Gemisch aus 58,5 g (0,8 val) 2-Ethyl-1,3-hexandiol, 78,9 g (0,2 val) des Polyols B3), 5,1 g Triethylorthoformiat als Wasserfänger und 0,02 g Dibutylzinndilaurat (DBTL) als Katalysator versetzt und 22 Stunden gerührt, bis IR-spektroskopisch kein Isocyanat mehr nachweisbar war. Nach Abkühlen auf Raumtemperatur wurde das Reaktionsgemisch mit 129,4 g Butylacetat verdünnt. Es lag ein erfindungsgemäßes Silangruppen enthaltendes Polyurethan in Form einer farblosen Lösung vor.

| | |
|---|---|
| Festkörpergehalt: | 80 % |
| Viskosität (23°C): | 880 mPas |

### Beispiel 5 (erfindungsgemäß)

375,0 g (1,0 val) der Zusammensetzung A1) wurden bei einer Temperatur von 80°C unter trockenem Stickstoff mit einem Gemisch aus 43,9 g (0,6 val) 2-Ethyl-1,3-hexandiol, 339,3 g (0,4 val) des Polyols B4), 7,6 g Triethylorthoformiat als Wasserfänger und 0,04 g DBTL als Katalysator versetzt und 24 Stunden gerührt, bis IR-spektroskopisch kein Isocyanat mehr nachweisbar war. Nach Abkühlen auf Raumtemperatur wurde das Reaktionsgemisch mit 106,7 g Solventnaphtha 100 verdünnt. Es lag ein erfindungsgemäßes Silangruppen enthaltendes Polyurethan in Form einer farblosen Lösung vor.

| | |
|---|---|
| Festkörpergehalt: | 80 % |
| Viskosität (23°C): | 8.400 mPas |

### Beispiel 6 (erfindungsgemäß)

262,5 g (0,7 val) der Zusammensetzung A1) und 129,9 g (0,3 val) des isocyanat- und silanfunktionellen Thiourethans A2) wurden bei einer Temperatur von 80°C unter trockenem Stickstoff mit einem Gemisch aus 65,8 g (0,9 val) 2-Ethyl-1,3-hexandiol, 106,1 g (0,1 val) des Polyols B1), 5,6 g Triethylorthoformiat als Wasserfänger und 0,03 g DBTL als Katalysator versetzt und 22 Stunden gerührt, bis IR-spektroskopisch kein Isocyanat mehr nachweisbar war. Nach Abkühlen auf Raumtemperatur wurde das Reaktionsgemisch mit 100,1 g Solventnaphtha 100 verdünnt. Es lag ein erfindungsgemäßes Silangruppen enthaltendes Polyurethan in Form einer farblosen Lösung vor.

| | |
|---|---|
| Festkörpergehalt: | 80 % |
| Viskosität (23°C): | 1.190 mPas |

### Beispiel 7 (erfindungsgemäß)

300,0 g (0,7 val) der Zusammensetzung A1) und 97,7 g (0,2 val) des isocyanat- und silanfunktionellen Thiourethans A3) wurden bei einer Temperatur von 80°C unter trockenem Stickstoff mit einem Gemisch aus 65,8 g (0,9 val) 2-Ethyl-1,3-hexandiol, 106,1 g (0,1 val) des Polyols B1), 5,7 g Triethylorthoformiat als Wasserfänger und 0,03 g DBTL als Katalysator versetzt und 22 Stunden gerührt, bis IR-spektroskopisch kein Isocyanat mehr nachweisbar war. Nach Abkühlen auf Raumtemperatur wurde das Reaktionsgemisch mit 90,8 g Solventnaphtha 100 verdünnt. Es lag ein erfindungsgemäßes Silangruppen enthaltendes Polyurethan in Form einer farblosen Lösung vor.

| | |
|---|---|
| Festkörpergehalt: | 80 % |
| Viskosität (23°C): | 2.480 mPas |

### Beispiel 8 (erfindungsgemäß)

375,0 g (1,0 val) der Zusammensetzung A1) wurden bei einer Temperatur von 80°C unter trockenem Stickstoff mit 4250 g (1,0 val) des Polyols B5), 9,2 g Vinyltrimethoxysilan als Wasserfänger und 0,2 g DBTL als Katalysator versetzt und solange gerührt, bis IR-spektroskopisch kein Isocyanat mehr nachweisbar war. Es lag ein erfindungsgemäßes Silangruppen enthaltendes Polyurethan in Form eines viskosen farblosen Harzes vor.

| | |
|---|---|
| Festkörpergehalt: | 100 % |
| Viskosität (23°C): | 48.000 mPas |

### Beispiel 9 (Vergleich)

365,2 g (1,0 val) der Zusammensetzung A4) wurden bei einer Temperatur von 80°C unter trockenem Stickstoff mit einem Gemisch aus 58,5 g (0,8 val) 2-Ethyl-1,3-hexandiol, 212,1 g (0,2 val) des Polyols B1) und 6,5 g Triethylorthoformiat als Wasserfänger versetzt und Stunden gerührt. Nach ca. 1 Stunde stieg die Viskosität des Reaktionsgemische deutlich an. Nach drei Stunden war der Reaktionsansatz komplett geliert.

Das Beispiel zeigt, dass durch äquimolare Umsetzung eines Diisocyanates mit einem Mercaptosilan ohne anschließende Dünnschichtdestillation erhaltene Thiourethane aufgrund des sehr hohen Monomergehaltes, der zu Kettenverlängerung und Vernetzung führt, zur Herstellung Silangruppen enthaltender Polyurethane ungeeignet sind.

### Beispiele 10 - 16 (Verwendung, erfindungsgemäß)

Aus den erfindungsgemäßen Silangruppen enthaltenden Polyurethanen 1) bis 7) wurden unter Mitverwendung der in Tabelle 1 aufgeführten Hilfs- und Zusatzstoffe Lacke formuliert und jeweils auf einen Feststoffgehalt von 50 % eingestellt. Die Lacke wurden in einer Naßfilm-Schichtdicke von ca. 80 µm auf Glasplatten appliziert und nach 15 minütigem Ablüften bei Raumtemperatur 30 min bei 140°C getrocknet. Es wurden in allen Fällen hochglänzende transparente Lackfilme erhalten. Die nachfolgende Tabelle 1 zeigt die Zusammensetzungen der Lackformulierungen (jeweils Gew.-Teile) sowie lacktechnologische Eigenschaften der erhaltenen Beschichtungen.

**Tabelle 1**

| **Beispiel** | | **10** | **11** | **12** | **13** | **14** | **15** | **16** |
|---|---|---|---|---|---|---|---|---|
| Silangruppen enthaltendes Polyurethan aus Beispiel 1 | | 100,0 | - | - | - | - | - | - |
| Silangruppen enthaltendes Polyurethan aus Beispiel 2 | | - | 100,0 | - | - | - | - | - |
| Silangruppen enthaltendes Polyurethan aus Beispiel 3 | | - | - | 100,0 | - | - | - | - |
| Silangruppen enthaltendes Polyurethan aus Beispiel 4 | | - | - | - | 100,0 | - | - | - |
| Silangruppen enthaltendes Polyurethan aus Beispiel 5 | | - | - | - | - | 100,0 | - | - |
| Silangruppen enthaltendes Polyurethan aus Beispiel 6 | | - | - | - | - | - | 100,0 | - |
| Silangruppen enthaltendes Polyurethan aus Beispiel 7 | | - | - | - | - | - | - | 100,0 |
| Baysilon® OL 17 (10 % in MPA) [1] | | 0,5 | 0,5 | 0,5 | 0,5 | 0,5 | 0,5 | 0,5 |
| Modaflow® Resin (1 % in MPA) [2] | | 0,5 | 0,5 | 0,5 | 0,5 | 0,5 | 0,5 | 0,5 |
| K-Kat® 5218 (65 %ige Lieferform) [3] | | 3,1 | 3,1 | 3,1 | 3,1 | 3,1 | 3,1 | 3,1 |
| Solvent Naphta 100 | | - | 40,0 | - | - | 60,0 | 60,0 | 60,0 |
| Butylacetat | | 100,0 | - | 40,0 | 60,0 | - | - | - |
| Filmoptik | | i.O. | i.O. | i.O. | i.O. | i.O. | i.O. | i.O. |
| Schichtdicke (µm) | | 30 | 40 | 45 | 40 | 50 | 35 | 40 |
| Pendelhärte (s) [4] | | 107 | 135 | 158 | 97 | 151 | 207 | 198 |
| Lösemittelbeständigkeit [5] | (X / MPA / EA / Ac) 1 min | 0013 | 0013 | 0012 | 0012 | 0012 | 0012 | 0002 |
| | 5 min | 0023 | 0023 | 0022 | 0023 | 0122 | 0023 | 0022 |
| Kratzbeständigkeit [6] | Nassverkratzung | 84 / 86 | 80 / 80 | 73 / 74 | 80 / 82 | 80 / 80 | 75 / 76 | 70 / 73 |
| | Trockenverkratzung | 76 / 90 | 80 / 90 | 78 / 87 | 82 / 94 | 80 / 92 | 78 / 87 | 70 / 85 |

| | | | | | | | | |
|---|---|---|---|---|---|---|---|---|
| [1] Verlaufsadditiv (OMG Borchers GmbH, Langenfeld, Deutschland) [2] Verlaufsadditiv (Cytec Surface Specialties SA / NV, Brussels, Belgium) [3] Aluminium Chelat, Katalysator (King Industries, Inc, Norwalk, CT, USA) [4] Pendelhärte nach König (DIN 53157) [5] Beständigkeit des ausgehärteten Lackfilmes gegen Xylol (X), 1-Methoxypropylacetat-2 (MPA), Ethylacetat (EA) und Aceton (Ac) nach einer Einwirkzeit von 1 min bzw. 5 min. Bewertung: 0 - 5 (0 = Lackfilm unverändert; 1 = sichtbare Veränderung; 2 = spürbare Erweichung; 3 = starke Erweichung; 4 = bis zum Untergrund erweicht; 5 = ohne Fremdeinwirkung völlig zerstört) [6] Die Bestimmung der Beständigkeit von Beschichtungen gegenüber Nassverkratzung erfolgte mit Hilfe einer Laborwaschanlage der Fa. Amtec-Kistler nach DIN EN ISO 20566. | | | | | | | | |

Die Beständigkeit gegenüber einer Trockenverkratzung wurde mittels eines sogenannten Hammertest geprüft. Dabei wurde ein Hammer (Gewicht: 800 g ohne Stiel), der an seiner flachen Seite mit Stahlwolle 00 bespannt war, vorsichtig im rechten Winkel auf die beschichtete Oberfläche aufgesetzt und ohne zu verkanten und ohne zusätzliche Körperkraft in einer Spur über die Beschichtung geführt. Es wurden jeweils 10 Doppelhübe durchgeführt. Nach der Belastung mit dem Verkratzungsmedium wurde die Prüffläche mit einem weichen Tuch gereinigt und anschließend der Glanz (20°-Winkel) nach DIN EN ISO 2813 quer zur Verkratzungsrichtung gemessen. Die Angaben zur Nass- bzw. Trockenverkratzung erfolgen in % Restglanz, gemessen unmittelbar nach Verkratzung (erster Wert) sowie nach "Reflow"-Bedingungen, d. h. zweistündiger Lagerung bei 60°C (zweiter Wert), jeweils relativ zum Ausgangsglanz der Beschichtung.

### Beispiele 17 -18 (Verwendung, erfindungsgemäß)

Die Silangruppen enthaltenden Polyurethane aus Beispiel 3 und Beispiel 4 wurden jeweils mit 0,5 % einer 10 %-igen Lösung von p-Toluolsulfonsäure-Monohydrat in MPA als Katalysator versetzt und in einer Naßfilm-Schichtdicke von ca. 80 µm auf Glasplatten appliziert. Nach 1 Stunde waren die beiden hochglänzenden transparenten Lackfilme jeweils klebfrei. Die nachfolgende Tabelle 2 zeigt neben den Zusammensetzungen der Lacke (jeweils Gew.-Teile) die nach jeweils einem Tag und einer Woche Raumtemperaturtrocknung gemessenen Pendelhärten und Lösemittelbeständigkeiten.

**Tabelle 2**

| **Beispiel** | **17** | **18** |
|---|---|---|
| Silangruppen enthaltendes Polyurethan aus Beispiel 2 | 100,0 | - |
| Silangruppen enthaltendes Polyurethan aus Beispiel 3 | - | 100,0 |
| p-Toluolsulfonsäure-Monohydrat (10 %ig in MPA) | 0,5 | 0,5 |
| Filmoptik | i.O. | i.O. |
| Schichtdicke (µm) | 45 | 50 |
| nach 1 d: | | |
| Pendelhärte (s) [4] | 40 | 47 |
| Lösemittelbeständigkeit [5] (X / MPA / EA / Ac) 1 min | 0022 | 0022 |
| nach 7 d: | | |
| Pendelhärte (s) [4] | 73 | 97 |
| Lösemittelbeständigkeit [5] (X / MPA / EA / Ac) 1 min | 0022 | 0012 |

| | | |
|---|---|---|
| [4], [5] siehe Anmerkungen zu Tabelle 1 | | |

## Patentansprüche

1. Verfahren zur Herstellung von Silangruppen enthaltenden Polyurethanen, durch Umsetzung von wenigstens
A) einer Zusammensetzung enthaltend
a) eine oder mehrere Isocyanat- und Silangruppen enthaltende Verbindungen der allgemeinen Formel (I) 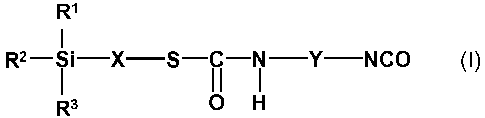 und
b) ≤ 1 Gew.-% bezogen auf die Gesamtmasse der Zusammensetzung A) eines oder mehrerer monomerer Diisocyanate mit aliphatisch, cycloaliphatisch, araliphatisch und/oder aromatisch gebundenen Isocyanatgruppen der allgemeinen Formel (II), **OCN-Y-NCO** (II)
wobei
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht und
Y für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht,
mit
B) einem mindestens difunktionellen Polyol mit einem zahlenmittleren Molekulargewicht Mₙ von 62 bis 22000 g/mol, bevorzugt 90 bis 12000 g/mol unter Einhaltung eines Äquivalentverhältnisses von Isocyanatgruppen zu Hydroxylgruppen von 0,7 : 1 bis 1,2 : 1.

2. Verfahren zur Herstellung von Silangruppen enthaltenden Polyurethanen gemäß Anspruch 1, **dadurch gekennzeichnet, dass** die Zusammensetzung A) zusätzlich Verbindungen c) der allgemeinen Formel (III) in einem Anteil von 2 bis 15 Gew.-%, bevorzugt 2 bis 10 Gew.-%, bezogen auf die Gesamtmasse der Komponenten a) und c), enthält, 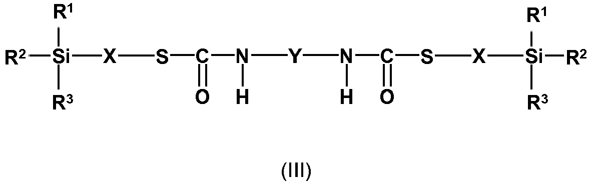 wobei
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht und
Y für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht.

3. Verfahren gemäß Anspruch 1, **dadurch gekennzeichnet, dass** die Zusammensetzung A)
a) ≥ 85 Gew.-%, bevorzugt ≥ 90 Gew.-% an Verbindungen der allgemeinen Formel (I),
b) ≤ 1 Gew.-% eines oder mehrerer monomerer Diisocyanate mit aliphatisch, cycloaliphatisch, araliphatisch und/oder aromatisch gebundenen Isocyanatgruppen der allgemeinen Formel (II) und
c) ≤ 15 Gew.-%, bevorzugt ≤ 10 Gew.-% an Verbindungen der allgemeinen Formel (III) 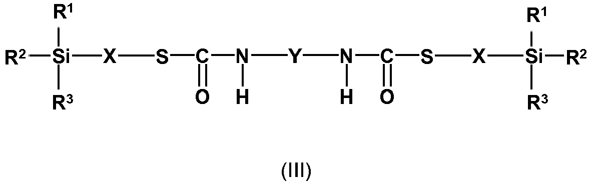
enthält,
wobei sich der Anteil an a) und c) jeweils auf die Gesamtmasse der Verbindungen a) und c) bezieht, der Anteil an b) sich auf die Gesamtmasse der Zusammensetzung A) bezieht,
und wobei
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht und
Y für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht.

4. Verfahren gemäß einem der Ansprüche 1 bis 3, **dadurch gekennzeichnet, dass** für die Formeln (I) und (II) der Komponenten a) und b) oder für die Formeln (I), (II) und (III) der Komponenten a), b) und c) gilt, dass
Y für einen linearen oder verzweigten, aliphatischen oder cycloaliphatischen Rest mit 6 bis 13 Kohlenstoffatomen steht.

5. Verfahren gemäß einem der Ansprüche 1 bis 4, **dadurch gekennzeichnet, dass** für die Formel (I) der Komponente a) oder die Formeln (I) und (III) der Komponenten a) und c) gilt, dass
R¹, R² und R³ für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann und
X für einen linearen oder verzweigten Alkylenrest mit 2 bis 10 Kohlenstoffatomen steht.

6. Verfahren gemäß einem der Ansprüche 1 bis 5, **dadurch gekennzeichnet, dass** für die Formel (I) der Komponente a) oder die Formeln (I) und (III) der Komponenten a) und c) gilt, dass
R¹, R² und R³ für gleiche oder verschiedene Reste stehen und jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht und
X für einen Propylenrest (-CH₂-CH₂-CH₂-) steht.

7. Verfahren gemäß einem der Ansprüche 1 bis 6, **dadurch gekennzeichnet, dass** für die Formel (I) der Komponente a) oder die Formeln (I) und (III) der Komponenten a) und c) gilt, dass
R¹, R² und R³ für gleiche oder verschiedene Reste stehen und jeweils Methyl, Methoxy oder Ethoxy bedeuten, mit der Maßgabe, daß mindestens einer der Reste R1, R2 und R3 für einen Methoxy- oder Ethoxyrest steht und
X für einen Propylenrest (-CH₂-CH₂-CH₂-) steht.

8. Verfahren gemäß einem der Ansprüche 1 bis 7, **dadurch gekennzeichnet, dass** die Polyolkomponente B) eine mittlere Funktionalität von 2 bis 6, bevorzugt von 2 bis 4 aufweist.

9. Verfahren gemäß einem der Ansprüche 1 bis 8, **dadurch gekennzeichnet, dass** als Komponente B) mehrwertige Alkohole, Ether- oder Esteralkohole und/oder polymere Polyole zum Einsatz kommen, wobei die polymeren Polyole ein zahlenmittleren Molekulargewicht Mₙ von 200 bis 22000 g/mol, bevorzugt 250 bis 18000 g/mol aufweisen.

10. Verfahren gemäß Anspruch 9, **dadurch gekennzeichnet, dass** als Komponente B) mehrwertige Alkohole und/oder Ether- oder Esteralkohole eingesetzt werden, die 2 bis 14 Kohlenstoffatome, bevorzugt 4 bis 10 Kohlenstoffatome enthalten.

11. Verfahren gemäß Anspruch 10, **dadurch gekennzeichnet, dass** als Komponente B) Polyether-, Polyester-, Polycarbonat- und/oder Polyacrylatpolyole eingesetzt werden.

12. Silangruppen enthaltende Polyurethane, erhältlich nach einem Verfahren gemäß einem der Ansprüche 1 bis 11.

13. Verwendung der Silangruppen enthaltenden Polyurethane gemäß Anspruch 12 als Ausgangskomponente bei der Herstellung von vernetzbaren Bindemitteln.

14. Verwendung der Silangruppen enthaltenden Polyurethane gemäß Anspruch 12 als Ausgangskomponente bei der Herstellung von vernetzbaren Lack-, Dichtstoff- oder Klebstoffrohstoffen.

15. Vernetzbare Bindemittel, enthaltend Silangruppen enthaltenden Polyurethane gemäß Anspruch 12.

## Claims

1. Process for preparing polyurethanes containing silane groups, by reacting at least
A) a composition containing
a) compounds of the general formula (I) containing one or more isocyanate and silane groups 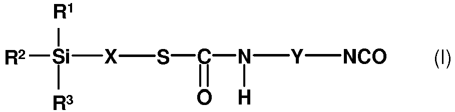 and
b) ≤ 1% by weight, based on the total mass of composition A), of one or more monomeric diisocyanates having aliphatically, cycloaliphatically, araliphatically and/or aromatically bonded isocyanate groups of the general formula (II) **OCN-Y-NCO** (II)
where
R¹, R² and R³ are identical or different radicals and each is a saturated or unsaturated, linear or branched, aliphatic or cycloaliphatic radical or an optionally substituted aromatic or araliphatic radical having up to 18 carbon atoms, which may optionally contain up to 3 heteroatoms from the group of oxygen, sulfur, nitrogen,
X is a linear or branched organic radical having at least 2 carbon atoms and
Y is a linear or branched, aliphatic or cycloaliphatic radical having 4 to 18 carbon atoms or an optionally substituted aromatic or araliphatic radical having 6 to 18 carbon atoms,
with
B) an at least difunctional polyol having a number-average molecular weight Mₙ of 62 to 22 000 g/mol, preferably 90 to 12 000 g/mol,
while maintaining a ratio of equivalents of isocyanate groups to hydroxyl groups of 0.7:1 to 1.2:1.

2. Process for preparing polyurethanes containing silane groups according to Claim 1, **characterized in that** composition A) additionally comprises compounds c) of the general formula (III) in a proportion of 2% to 15% by weight, preferably 2% to 10% by weight, based on the total mass of components a) and c), 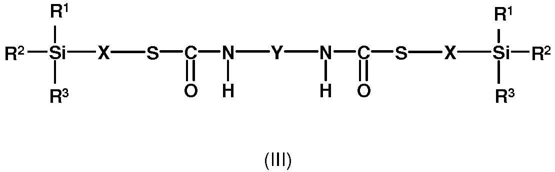 where
R¹, R² and R³ are identical or different radicals and each is a saturated or unsaturated, linear or branched, aliphatic or cycloaliphatic radical or an optionally substituted aromatic or araliphatic radical having up to 18 carbon atoms, which may optionally contain up to 3 heteroatoms from the group of oxygen, sulfur, nitrogen,
X is a linear or branched organic radical having at least 2 carbon atoms and
Y is a linear or branched, aliphatic or cycloaliphatic radical having 4 to 18 carbon atoms or an optionally substituted aromatic or araliphatic radical having 6 to 18 carbon atoms.

3. Process according to Claim 1, **characterized in that** composition A) comprises
a) ≥ 85% by weight, preferably ≥ 90% by weight, of compounds of the general formula (I),
b) ≤ 1% by weight of one or more monomeric diisocyanates having aliphatically, cycloaliphatically, araliphatically and/or aromatically bonded isocyanate groups of the general formula (II) and
c) ≤ 15% by weight, preferably ≤ 10% by weight, of compounds of the general formula (III), 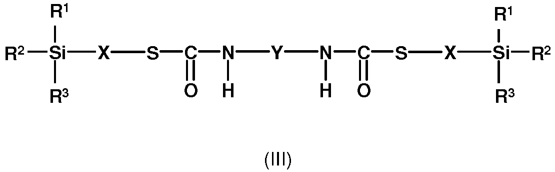
where the proportion of each of a) and c) relates to the total mass of the compounds a) and c), and the proportion of b) relates to the total mass of composition A),
and where
R¹, R² and R³ are identical or different radicals and each is a saturated or unsaturated, linear or branched, aliphatic or cycloaliphatic radical or an optionally substituted aromatic or araliphatic radical having up to 18 carbon atoms, which may optionally contain up to 3 heteroatoms from the group of oxygen, sulfur, nitrogen,
X is a linear or branched organic radical having at least 2 carbon atoms and
Y is a linear or branched, aliphatic or cycloaliphatic radical having 4 to 18 carbon atoms or an optionally substituted aromatic or araliphatic radical having 6 to 18 carbon atoms.

4. Process according to any of Claims 1 to 3, **characterized in that**, for the formulae (I) and (II) of components a) and b), or for the formulae (I), (II) and (III) of components a), b) and c),
Y is a linear or branched, aliphatic or cycloaliphatic radical having 6 to 13 carbon atoms.

5. Process according to any of Claims 1 to 4, **characterized in that**, for the formula (I) of component a) or the formulae (I) and (III) of components a) and c),
R¹, R² and R³ are identical or different radicals and each is a saturated, linear or branched, aliphatic or cycloaliphatic radical having up to 6 carbon atoms, which may optionally contain up to 3 oxygen atoms and
X is a linear or branched alkylene radical having 2 to 10 carbon atoms.

6. Process according to any of Claims 1 to 5, **characterized in that**, for the formula (I) of component a) or the formulae (I) and (III) of components a) and c),
R¹, R² and R³ are identical or different radicals and each is an alkyl radical having up to 6 carbon atoms and/or alkoxy radical containing up to 3 oxygen atoms, with the proviso that at least one of the R¹, R² and R³ radicals is such an alkoxy radical and
X is a propylene radical (-CH₂-CH₂-CH₂-).

7. Process according to any of Claims 1 to 6, **characterized in that**, for the formula (I) of component a) or the formulae (I) and (III) of components a) and c),
R¹, R² and R³ are identical or different radicals and each is methyl, methoxy or ethoxy, with the proviso that at least one of the R1, R2 and R3 radicals is a methoxy or ethoxy radical and
X is a propylene radical (-CH₂-CH₂-CH₂-).

8. Process according to any of Claims 1 to 7, **characterized in that** the polyol component B) has a mean functionality of 2 to 6, preferably of 2 to 4.

9. Process according to any of Claims 1 to 8, **characterized in that** components B) used are polyhydric alcohols, ether alcohols or ester alcohols and/or polymeric polyols, said polymeric polyols having a number-average molecular weight Mₙ of 200 to 22 000 g/mol, preferably 250 to 18 000 g/mol.

10. Process according to Claim 9, **characterized in that** components B) used are polyhydric alcohols and/or ether alcohols or ester alcohols containing 2 to 14 carbon atoms, preferably 4 to 10 carbon atoms.

11. Process according to Claim 10, **characterized in that** components B) used are polyether polyols, polyester polyols, polycarbonate polyols and/or polyacrylate polyols.

12. Polyurethanes containing silane groups, obtainable by a process according to any of claims 1 to 11.

13. Use of the polyurethanes containing silane groups according to Claim 12 as a starting component in the production of crosslinkable binders.

14. Use of the polyurethanes containing silane groups according to Claim 12 as a starting component in the production of crosslinkable raw materials for paints, sealants or adhesives.

15. Crosslinkable binders comprising polyurethanes containing silane groups according to Claim 12.

## Revendications

1. Procédé de fabrication de polyuréthanes contenant des groupes silane, par mise en réaction d'au moins :
A) une composition contenant :
a) un ou plusieurs composés contenant des groupes isocyanate et silane de formule générale (I) 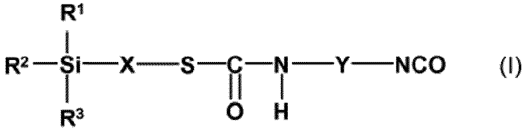 et
b) ≤ 1 % en poids, par rapport à la masse totale de la composition A), d'un ou de plusieurs diisocyanates monomères contenant des groupes isocyanate reliés aliphatiquement, cycloaliphatiquement, araliphatiquement et/ou aromatiquement de formule générale (II) **OCN-Y-NCO** (II)
R¹, R² et R³ représentant des radicaux identiques ou différents, et signifiant chacun un radical aliphatique ou cycloaliphatique saturé ou insaturé, linéaire ou ramifié, ou un radical aromatique ou araliphatique éventuellement substitué contenant jusqu'à 18 atomes de carbone, qui peut éventuellement contenir jusqu'à 3 hétéroatomes de la série constituée par l'oxygène, le soufre, l'azote,
X représentant un radical organique linéaire ou ramifié contenant au moins 2 atomes de carbone, et
Y représentant un radical aliphatique ou cycloaliphatique linéaire ou ramifié contenant 4 à 18 atomes de carbone, ou un radical aromatique ou araliphatique éventuellement substitué contenant 6 à 18 atomes de carbone,
avec
B) un polyol au moins bifonctionnel ayant un poids moléculaire moyen en nombre Mₙ de 62 à 22 000 g/mol, de préférence de 90 à 12 000 g/mol,
en maintenant un rapport équivalent entre les groupes isocyanate et les groupes hydroxyle de 0,7:1 à 1,2:1.

2. Procédé de fabrication de polyuréthanes contenant des groupes silane selon la revendication 1, **caractérisé en ce que** la composition A) contient en outre des composés C) de formule générale (III) en une proportion de 2 à 15 % en poids, de préférence de 2 à 10 % en poids, par rapport à la masse totale des composants a) et c), 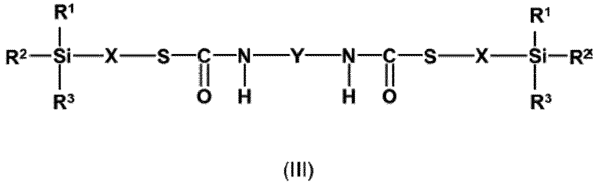 dans laquelle
R¹, R² et R³ représentent des radicaux identiques ou différents, et signifient chacun un radical aliphatique ou cycloaliphatique saturé ou insaturé, linéaire ou ramifié, ou un radical aromatique ou araliphatique éventuellement substitué contenant jusqu'à 18 atomes de carbone, qui peut éventuellement contenir jusqu'à 3 hétéroatomes de la série constituée par l'oxygène, le soufre, l'azote,
X représente un radical organique linéaire ou ramifié contenant au moins 2 atomes de carbone, et
Y représente un radical aliphatique ou cycloaliphatique linéaire ou ramifié contenant 4 à 18 atomes de carbone, ou un radical aromatique ou araliphatique éventuellement substitué contenant 6 à 18 atomes de carbone.

3. Procédé selon la revendication 1, **caractérisé en ce que** la composition A) contient :
a) ≥ 85 % en poids, de préférence ≥ 90 % en poids, de composés de formule générale (I),
b) ≤ 1 % en poids d'un ou de plusieurs diisocyanates monomères contenant des groupes isocyanate de formule générale (II) reliés aliphatiquement, cycloaliphatiquement, araliphatiquement et/ou aromatiquement, et
c) ≤ 15 % en poids, de préférence ≤ 10 % en poids, de composés de formule générale (III) 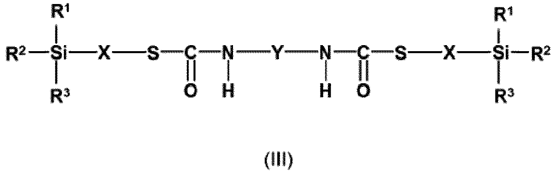
la proportion de a) et c) se rapportant à chaque fois à la masse totale des composés a) et c), la proportion de b) se rapportant à la masse totale de la composition A),
et
R¹, R² et R³ représentant des radicaux identiques ou différents, et signifiant chacun un radical aliphatique ou cycloaliphatique saturé ou insaturé, linéaire ou ramifié, ou un radical aromatique ou araliphatique éventuellement substitué contenant jusqu'à 18 atomes de carbone, qui peut éventuellement contenir jusqu'à 3 hétéroatomes de la série constituée par l'oxygène, le soufre, l'azote,
X représentant un radical organique linéaire ou ramifié contenant au moins 2 atomes de carbone, et
Y représentant un radical aliphatique ou cycloaliphatique linéaire ou ramifié contenant 4 à 18 atomes de carbone, ou un radical aromatique ou araliphatique éventuellement substitué contenant 6 à 18 atomes de carbone.

4. Procédé selon l'une quelconque des revendications 1 à 3, **caractérisé en ce que**, pour les formules (I) et (II) des composants a) et b) ou pour les formules (I), (II) et (III) des composants a), b) et c),
Y représente un radical aliphatique ou cycloaliphatique linéaire ou ramifié de 6 à 13 atomes de carbone.

5. Procédé selon l'une quelconque des revendications 1 à 4, **caractérisé en ce que**, pour la formule (I) du composant a) ou pour les formules (I) et (III) des composants a) et c),
R¹, R² et R³ représentent des radicaux identiques ou différents, et signifient chacun un radical aliphatique ou cycloaliphatique saturé, linéaire ou ramifié, contenant jusqu'à 6 atomes de carbone, qui peut éventuellement contenir jusqu'à 3 atomes d'oxygène,
X représente un radical alkylène linéaire ou ramifié contenant 2 à 10 atomes de carbone.

6. Procédé selon l'une quelconque des revendications 1 à 5, **caractérisé en ce que**, pour la formule (I) du composant a) ou pour les formules (I) et (III) des composants a) et c),
R¹, R² et R³ représentent des radicaux identiques ou différents, et signifient chacun des radicaux alkyle contenant jusqu'à 6 atomes de carbone et/ou des radicaux alcoxy contenant jusqu'à 3 atomes d'oxygène, à condition qu'au moins un des radicaux R¹, R² et R³ représente un tel radical alcoxy, et
X représente un radical propylène (-CH₂-CH₂-CH₂-).

7. Procédé selon l'une quelconque des revendications 1 à 6, **caractérisé en ce que**, pour la formule (I) du composant a) ou pour les formules (I) et (III) des composants a) et c),
R¹, R² et R³ représentent des radicaux identiques ou différents, et signifient chacun méthyle, méthoxy ou éthoxy, à condition qu'au moins un des radicaux R¹, R² et R³ représente un radical méthoxy ou éthoxy, et
X représente un radical propylène (-CH₂-CH₂-CH₂-).

8. Procédé selon l'une quelconque des revendications 1 à 7, **caractérisé en ce que** le composant polyol B) présente une fonctionnalité moyenne de 2 à 6, de préférence de 2 à 4.

9. Procédé selon l'une quelconque des revendications 1 à 8, **caractérisé en ce que** des alcools, éther- ou ester-alcools polyvalents et/ou des polyols polymères sont utilisés en tant que composant B), les polyols polymères présentant un poids moléculaire moyen en nombre Mₙ de 200 à 22 000 g/mol, de préférence de 250 à 18 000 g/mol.

10. Procédé selon la revendication 9, **caractérisé en ce que** des alcools et/ou des éther- ou ester-alcools polyvalents sont utilisés en tant que composant B), qui contiennent 2 à 14 atomes de carbone, de préférence 4 à 10 atomes de carbone.

11. Procédé selon la revendication 10, **caractérisé en ce que** des polyéther-, polyester-, polycarbonate- et/ou polyacrylate-polyols sont utilisés en tant que composant B).

12. Polyuréthanes contenant des groupes silane, pouvant être obtenus par un procédé selon l'une quelconque des revendications 1 à 11.

13. Utilisation des polyuréthanes contenant des groupes silane selon la revendication 12 en tant que composant de départ lors de la fabrication de liants réticulables.

14. Utilisation des polyuréthanes contenant des groupes silane selon la revendication 12 en tant que composant de départ lors de la fabrication de matières premières de vernis, de matériaux d'étanchéité ou d'adhésifs réticulables.

15. Liants réticulables, contenant des polyuréthanes contenant des groupes silane selon la revendication 12.
